# EUROPEAN PATENT SPECIFICATION

(11) **EP 1 378 898 B1**
(45) Date of publication and mention of the grant of the patent: **22.11.2006**
(21) Application number: 03013748.3
(22) Date of filing: 17.06.2003
(51) Int. Cl.: G11B 7/26, G11B 23/00

(54) **Transparent stamper for molding optical multi-layer recording medium and process for producing optical multi-layer recording medium**
Durchsichtige Prägeplatte für das Prägen von mehrschichtigen optischen Aufzeichnungsmedien und Verfahren zur Herstellung eines mehrschichtigen optischen Aufzeichnungsmediums
Matrice transparente pour le moulage d'un support d'enregistrement optique multicouche et procédé de fabrication d'un support d'enregistrement optique multicouche

(30) Priority: 04.07.2002 JP 2002196096
(43) Date of publication of application: 07.01.2004
(73) Proprietor: Pioneer Corporation, Tokyo 153-0063 (JP)
(72) Inventor: Yamaguchi, Masataka, Tsurugashima-shi, Saitama 350-2288 (JP); Hanzawa, Shinichi, Nakakoma-gun, Yamanashi 409-3843 (JP); Takishita, Toshihiko, Nakakoma-gun, Yamanashi 409-3843 (JP)
(74) Representative: Grünecker, Kinkeldey, Stockmair & Schwanhäusser Anwaltssozietät

(56) References cited:
- EP-A- 0 368 442
- US-A- 5 175 030

## Description

### BACKGROUND OF THE INVENTION

### (1) Field of the Invention

The present invention relates to a transparent stamper for molding an optical multi-layer recording medium and a process for producing an optical multi-layer recording medium.

### (2) Description of the Related Art

Recently, a large capacity medium, which is capable of distributing or recording large capacity data such as digital high vision, has been studied. Above all, a multi-layer recording medium having a recording surface consisting of two or more layers has been widely studied because it enables large capacity recording in spite of its compactness.

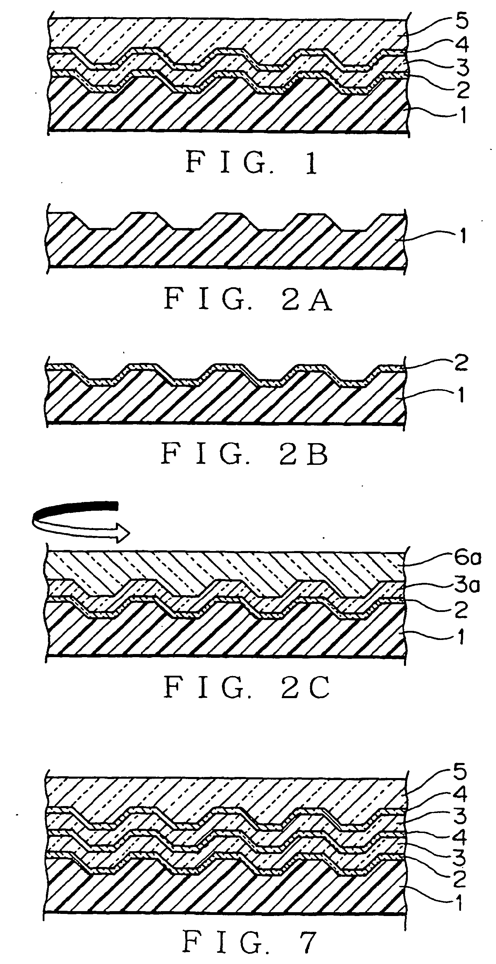

A general example of such an optical multi-layer recording medium is shown in Fig. 1, in which its cross sectional view is schematically illustrated. In this illustration, an example of a single-sided two-layer type rewritable recording medium is shown.

A first phase change recording layer 2 is formed on one side of a substrate 1 made of material having relatively high stiffness, such as resin, for example, polycarbonate, glass and metal. The substrate 1 is provided with a convexo-concave portion for forming recording marks, which is formed spirally or formed in a concentric circle-shape on said one side of the substrate 1. The first phase change recording layer 2 located on the convexo-concave portion of the substrate 1 has a convexo-concave shape accordingly and the recording marks are formed there.

On the first phase change recording layer 2, an optically permeable intermediate layer 3 made of transparent material (normally, resin), a second phase change recording layer 4, and a cover layer 5 are formed in this sequence.

The optically translucent intermediate layer 3 is provided with a convexo-concave portion (guide groove) for forming recording marks, which is formed spirally or formed in a concentric circle-shape on the layer 4-side of the layer 3. The second phase change recording layer 4 located on the convexo-concave portion of the substrate 1 has a convexo-concave shape accordingly and the recording marks are formed there.

The second phase change recording layer 4 is protected by the cover layer 5 made of transparent material (normally, resin).

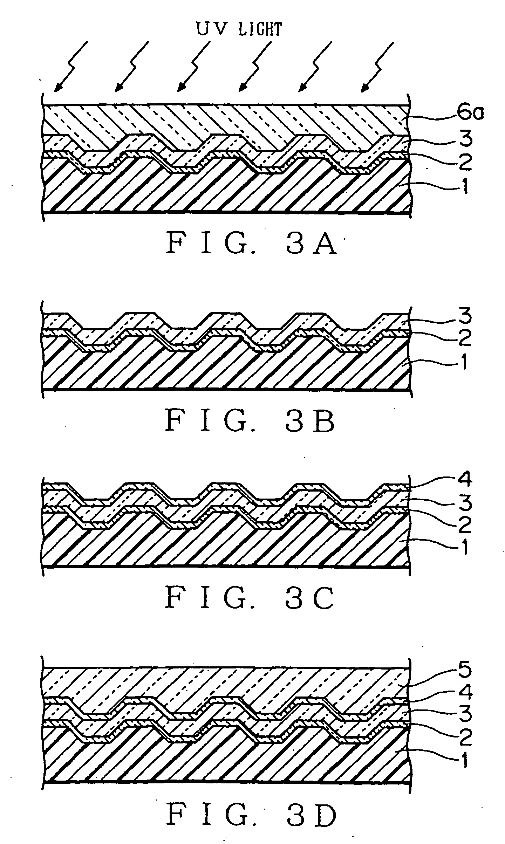

The optical multi-layer recording medium has been produced so far as shown schematically in Figs. 2 and 3.

First, as shown in Fig. 2B, the first phase change recording layer 2 is formed on the substrate 1 (see Fig. 2A) having a convex portion for forming the recording marks, which is formed by resin molding or etching, then non-cured photo-curing resin 3a is applied thereon by spin coating or the like and then, a stamper 6a is laminated thereon (see Fig. 2C) when the photo-curing resin 3a remains in its non-cured state.

The stamper 6a is made of glass or highly transparent resin such as polycarbonate and transmits light. On the other hand, the first phase change recording layer 2 does not transmit or hardly transmit light since it has a metal reflecting layer.

The stamper 6a is provided with a convexo-concave portion on its substrate 1-side so that a guide groove for recording is formed on the layer 4-side surface when the non-cured photo-curing resin 3a is cured and becomes the optically permeable intermediate layer 3.

Thereafter, as shown in Fig. 3A, the photo-curing resin 3a is irradiated with light having a wavelength suitable to the curing through the stamper 6a, thereby curing the photo-curing resin 3a to become the optically permeable intermediate layer 3.

Thereafter, as shown in Figs. 3B - 3D, the stamper 6a is taken off, then the second phase change recording layer 4 and the cover layer 5 are formed in this sequence on the optically permeable intermediate layer 3.

In the process for producing the optical multi-layer recording medium as described above, there is a problem that the stamper 6a can not be easily separated (released) from the optically permeable intermediate layer 3, which is formed when the photo-curing resin 3a is cured. When the stamper made of polycarbonate is employed, the stamper is hardly separated from the optically permeable intermediate layer.

In this respect, when the stamper made of glass is employed, it can be easily separated from the optically permeable intermediate layer. However, in this case, being different from the stamper made of polycarbonate, it is impossible to duplicate a large number of the stampers by means of formation with a master stamper because the formation of the convexo-concave portion of the stamper is forced to be carried out by etching or the like, causing increase in the number of manufacturing steps and high cost. This problem may be avoided by using the stamper made of glass repeatedly, however, the stamper made of glass is hard for a worker to handle and is easily broken.

In this respect, it may be a measure that the stamper made of polycarbonate is coated with a release agent, however, this measure has drawbacks such as increase in the number of manufacturing steps including the coating step described above and a possible problem that a desired formation of the concave portion can not be carried out when dust or the like is brought in the coating step.

From US 51 75 030 a microstructure-bearing composite plastic article and a method of making is known.

### SUMMARY OF THE INVENTION

It is therefore an objective of the present invention to solve the above problems and to provide a stamper having a good cost performance, which can be easily separated (released) from a layer of photo-curing resin, and a process for producing an optical multi-layer recording medium having a good productivity, which is carried out by using such a stamper.

In order to attain the above objective, the present invention is to provide a transparent stamper for molding an optical multi-layer recording medium, characterized in that the transparent stamper is made of amorphous polyolefin resin.

The transparent stamper as described above consists of thermoplastic amorphous polyolefin resin, which can be easily formed (molded). With the construction described above, a master stamper can be used, the productivity of the stamper itself improves, the cost of the stamper can be reduced, obtaining a good separation (release) from the layer of the photo-curing resin.

The present invention is also to provide a process for producing an optical multi-layer recording medium comprising the steps of: laminating a layer of non-cured photo-curing resin and a transparent stamper made of amorphous polyolefin resin in this sequence on a substrate; curing the non-cured photo-curing resin with light permeated through the transparent stamper; and removing the transparent stamper.

With the construction described above, the optical multi-layer recording medium can be produced with a good productivity and low cost.

### BRIEF DESCRIPTION OF THE DRAWINGS

Figure 1 is a schematic illustration of an example of an optical multi-layer recording medium (a single-sided two-layer type rewritable recording medium), to which the present invention can be applied;
Figures 2A, 2B and 2C are schematic illustrations of a conventional process for producing an optical multi-layer recording medium shown in Fig. 1;
Figures 3A, 3B, 3C and 3D are further schematic illustrations of a conventional process for producing an optical multi-layer recording medium shown in Fig. 1;
Figures 4A, 4B and 4C are schematic illustrations of a process for producing an optical multi-layer recording medium shown in Fig. 1 according to the present invention;
Figures 5A, 5B, 5C and 5D are further schematic illustrations of a process for producing an optical multi-layer recording medium shown in Fig. 1 according to the present invention;
Figure 6A is an expanded schematic illustration of an example of a first phase change recording layer of an optical multi-layer recording medium shown in Fig. 1;
Figure 6B is an expanded schematic illustration of a first example of a second phase change recording layer of an optical multi-layer recording medium shown in Fig. 1;
Figure 6C is an expanded schematic illustration of a second example of a second phase change recording layer of an optical multi-layer recording medium shown in Fig. 1;
Figure 7 is a schematic illustration of another example of an optical multi-layer recording medium (a single-sided three-layer type rewritable recording medium), to which the present invention can be applied;
Figures 8A and 8B are schematic illustrations of an example of forming a cover layer of an optical multi-layer recording medium shown in Fig. 1 by using a stamper according to the present invention;
Figure 9A is a drawing illustrating a cross section of a groove of a master stamper observed with an interatomic force microscope (AFM), which is a cross section of a guide groove formed on a surface of a layer formed by using a stamper according to the present invention;
Figure 9B is a drawing illustrating a cross section of a groove formed on a surface of a layer formed by using a stamper according to the present invention, observed with an interatomic force microscope (AFM);
Figure 10A is a graph showing a result of reduction in lack of uniformity of thickness for a layer formed by using a stamper made of nickel; and
Figure 10B is a graph showing a result of reduction in lack of uniformity of thickness for a layer formed by using a stamper made of amorphous polyolefin resin according to the present invention.

### DESCRIPTION OF THE PREFERRED EMBODIMENTS

In this invention, the resin for constituting the transparent stamper must be an amorphous polyolefin resin. In this respect, such an amorphous polyolefin resin is preferably an amorphous polyolefin resin which is capable of being accurately molded by using a master stamper made of metal or the like, for example, an amorphous polyolefin resin having glass transition point equal to or lower than 200 °C and high flowability upon molding. Since the photo-curing resin must be cured with the light permeated through the stamper, the stamper must have high permeability for the light having a wavelength region, which is necessary for the photo-curing resin to be cured. Moreover, in order to facilitate the separation (release) of the stamper from the photo-curing resin, the stamper must have a good resistance against acid, alkali and polar organic solvent. Further, when a normal crystalline polyolefin resin is employed as the stamper material, residual stress upon molding causes stress relaxation for crystallization, rendering the stamper to be curved, thereby the stamper becomes not suitable for its transparency and flatness. Accordingly, the polyolefin resin for the material of the stamper must be amorphous.

The amorphous polyolefin resin as described above is, for example, ZEONOR (manufactured by ZEON Corporation), ZEONEX (manufactured by ZEON Corporation), APL (manufactured by Mitsui Chemicals Co., Ltd.), APO (manufactured by Mitsui Chemicals Co., Ltd.), and ARTON (manufactured by JSR Corporation).

Employing such an amorphous polyolefin resin as its starting material, a transparent stamper is molded by using a master stamper made of metal or glass, to which a necessary shape is given by means of etching or the like. Preferably, the molding process is carried out with setting a mold temperature to be low, thereby improving the accuracy of the molding (i.e., accuracy of fine hollow portions).

Although the thickness of the stamper is not basically limited to any specific value, preferably, it may be from 0.6 mm to 1.5 mm, since the photo-curing resin must be cured with the light permeated through the stamper and the stamper must have certain mechanical strength which is needed as a stamper. More preferably, it may be about 1.1 mm, thereby enabling the usage of a mold same as that used upon molding of the substrate.

The stamper is usually reused after once being used. Although it preferably used only once, it can be used twice or more by selecting the starting resin material, by optimizing the photo-curing resin for forming the optically permeable intermediate layer and its curing condition, or by inspecting it before reuse.

The photo-curing resin in the present invention is a resin composition, in which initiator for photo-polymerization having sensitivity to light such as visible or ultraviolet light is compounded.

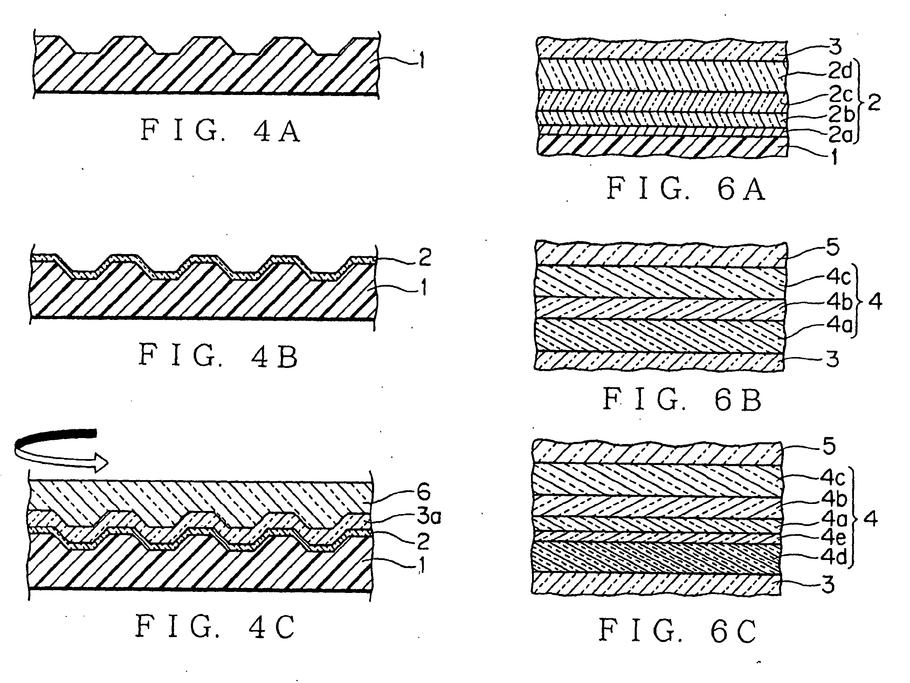

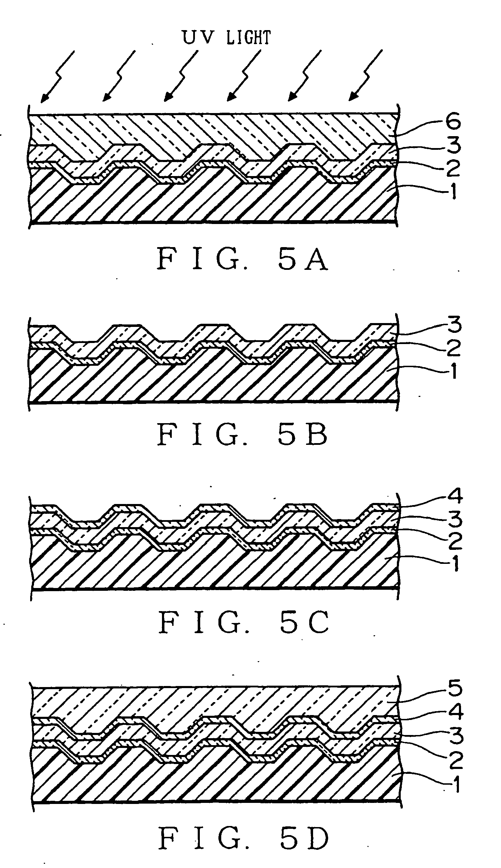

In the following, a process for producing an optical multi-layer recording medium according to the present invention, in which the stamper as described above is employed, will be explained with reference to Figs. 4 and 5.

As shown in Fig. 4B, a first phase change recording layer 2, which is a non-optically permeable layer, is formed on a substrate 1 shown in Fig. 4A, and thereafter, non-cured photo-curing resin 3a having viscosity of 50 - 800 mPs is dropped on the first phase change recording layer 2. After the dropping, a stamper 6 made of an amorphous polyolefin resin described above is put thereon as shown in Fig. 4C. At this time, the photo-curing resin 3a naturally spreads over. When the substrate is rotated with a speed of 2000 - 6000 cycles per minute, the photo-curing resin 3a spreads over to a specific area with a specific thickness, which can normally be set 20 - 30 µm. The thickness of the layer of the photo-curing resin 3a can be controlled by selecting the viscosity of the photo-curing resin besides by selecting the rotation speed and a period of time for the rotation.

Thus, the non-cured photo-curing resin 3a and the stamper 6 made of the amorphous polyolefin resin are laminated in this sequence on the substrate having the non-optically permeable layer (i.e., first phase change recording layer 2) thereon, and thereafter, the non-cured photo-curing resin is cured with the light permeated through the stamper.

That is, the light having a wavelength, which is suitable for curing the photo-curing resin, such as a ultraviolet light is irradiated through the stamper 6 as shown in Fig. 5A, thereby curing the photo-curing resin so as to form the optically permeable intermediate layer 3.

Thereafter, as shown in Fig. 5B, the stamper 6 is removed. The stamper 6 according to the present invention can be easily separated from the optically permeable intermediate layer 3. Even a part of the stamper 6 never remains on the optically permeable intermediate layer 3, thereby a high quality and highly reliable optical multi-layer recording medium can be produced.

Thereafter, as shown in Figs. 5C and 5D, a second phase change recording layer 4 and a cover layer 5 are formed in this sequence on the optically permeable intermediate layer 3, thereby the optical multi-layer recording medium is produced.

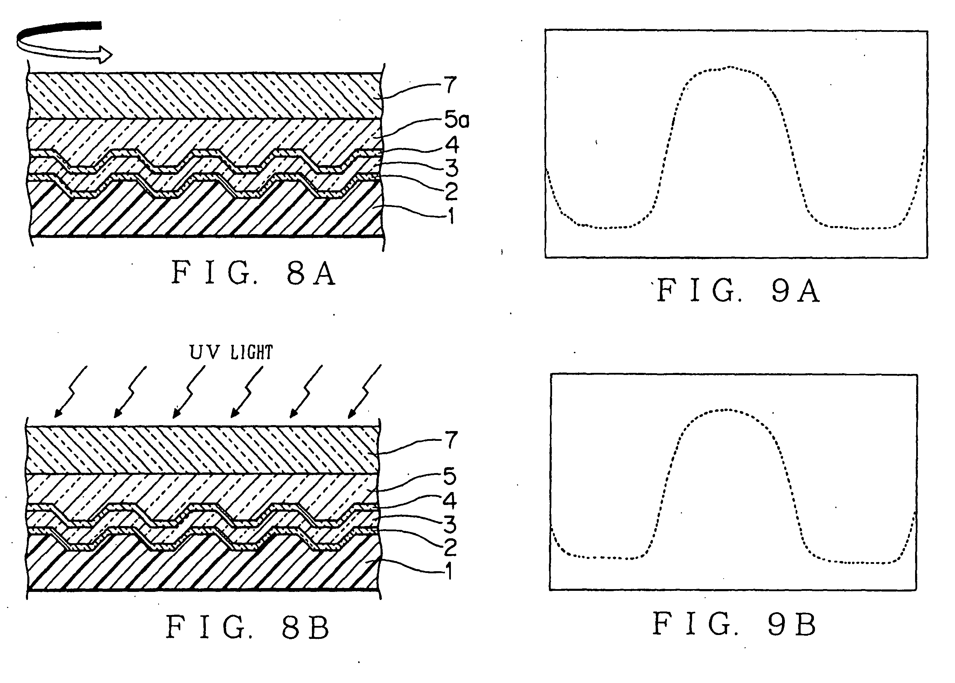

In the following, as an example of the constitution of the first phase change recording layer 2 formed as described above, a partially expanded schematic illustration of the first phase change recording layer 2 as shown in Fig. 1 is shown in Fig. 6A.

The first phase change recording layer 2 includes: a metal reflector film 2a, which is made of aluminum or silver alloy having no or almost no optical permeability and formed by a method of forming a metal film such as evaporation, chemical vapor deposition (CVD) and sputtering methods; a first dielectric film 2b; a phase change recording film 2c; and a second dielectric film 2d, which are formed on the substrate 1 in this sequence, wherein an optical characteristic of the phase change recording film 2c is changed, thereby enabling recording and erasing of information.

As for a detailed construction of the second phase change recording layer 4, there are two types. The first and second types are schematically shown in Figs. 6B and 6C, respectively.

As for the first type, the second phase change recording layer 4 includes: a first dielectric film 4a; a phase change recording film 4b; and a second dielectric film 4c, which are formed on the optically permeable intermediate layer 3 in this sequence, while as for the second type, the second phase change recording layer 4 includes: a dielectric film 4d; a translucent metal film 4e; a first dielectric film 4a; a phase change recording film 4b; and a second dielectric film 4c, which are formed on the optically permeable intermediate layer 3 in this sequence.

In the example described above, there are two recording layers. Instead, if three recording layers are formed, another optically permeable intermediate layer and a third phase change recording layer having the same structure as that of the second phase change recording layer are formed between the second phase change recording layer 4 and the cover layer 5. Such an example including three recording layers is schematically illustrated in Fig. 7. When a recording medium having more than three recording layers is produced, the number of the optically permeable intermediate layers and phase change recording layers is increased according to the number of the recording layers.

In the above description, the examples of a single-sided two-layer type or single-sided multi-layer type rewritable recording medium are explained. However, the process for producing an optical multi-layer recording medium according to the present invention can also be applied to a double-face two-layer type or double-face multi-layer type rewritable recording medium.

As a modification of the present invention, one or more recording layers besides the first and second phase change recording layers may be a recording layer, in which a reflector layer or translucent reflector layer consisting of metal or dielectric and a dye layer are combined, or may be a recording layer for exclusive regenerative use, in which a reflector layer or translucent reflector layer consisting of metal or dielectric and a ROM mark layer are combined.

The stamper according to the present invention can be used to form the optically permeable intermediate layer. The stamper according to the present invention can also be used to form the cover layer 5 shown in Fig. 1, showing that such a use is included in a scope of a process for producing an optical multi-layer recording medium according to the present invention.

In the process for producing an optical multi-layer recording medium as described above, after the second phase change recording layer 4 is formed as shown in Fig. 5C, the photo-curing resin 5a is dropped on an intermediate product of the optical multi-layer recording medium, and thereafter the stamper 7 made of amorphous polyolefin resin is put thereon with the intermediate product being rotated as shown in Fig. 8A.

Here, similarly to the case of forming the optically permeable intermediate layer, the thickness of the resin layer to be formed can be controlled by selecting the viscosity of the resin, the rotation speed and a period of time for the rotation. However, in general, the thickness of the cover layer is 60 - 110 µm, which is larger than the thickness of the optically permeable intermediate layer 3. Therefore, preferably, a photo-curing resin having viscosity higher than that of the photo-curing resin, which is used for forming the optically permeable intermediate layer 3, is used for forming the cover layer.

Thereafter, the light having a wavelength, which is suitable for curing the photo-curing resin, such as a ultraviolet light is irradiated through the stamper 7 as shown in Fig. 8B, thereby curing the photo-curing resin 5a so as to form the cover layer 5.

### EXAMPLES

In the following, examples of the process for producing an optical multi-layer recording medium according to the present invention will be explained.

### (Preparation of a transparent stamper made of amorphous polyolefin resin)

By using ZEONOR (manufactured by ZEON Corporation), which is cycloolefin polymer, a transparent stamper made of amorphous polyolefin resin according the present invention was prepared with a master stamper.

The thickness of the transparent stamper was 1.1 mm. One side of the stamper was provided with convex and concave portions (maximum height: 20 nm) for forming guide grooves for the second phase change recording layer, which were arranged concentrically.

### (Preparation of an intermediate product of an optical multi-layer recording medium)

A photo (ultraviolet light)-curing resin was dropped on a first phase change recording layer (see Fig. 4B), which was already formed on a polycarbonate substrate (thickness: 1.1 mm). Thereafter, the stamper made of amorphous polyolefin resin as prepared above was put thereon, thereafter the substrate was rotated so as to remove the excess photo (ultraviolet light)-curing resin.

Thereafter, ultraviolet light was irradiated through the stamper so as to cure the photo-curing resin, thereby forming an optically permeable intermediate layer having thickness of 20 µm. Thereafter, the stamper was separated therefrom, thereby obtaining a disk-shaped optical multi-layer recording medium. The separation of the stamper therefrom was easily carried out and no part of the stamper remained on the optically permeable intermediate layer.

The optically permeable intermediate layer thus formed was evaluated.

As for the guide groove of the polycarbonate substrate formed by using a sub-master stamper (i.e., a metal stamper transcribed from the master stamper) used above and the guide groove formed by using the stamper, cross sections of them were observed with an interatomic force microscope (AFM). The cross sections are shown in Figs. 9A and 9B, respectively.

Figures 9A and 9B reveal that the guide groove of the optically permeable intermediate layer formed by using the stamper according to the present invention accurately reproduced the guide groove of the master stamper similarly to the substrate for molding.

It was found that an unexpected secondary effect was obtained according to the process for producing an optical multi-layer recording medium, in which the stamper according to the present invention was used. In the following, the unexpected secondary effect will be explained.

As a basic research for the present invention, a photo (ultraviolet light)-curing resin (MP121 manufactured by Mitsubishi Rayon Co., Ltd.) was dropped on a polycarbonate substrate (thickness: 1.1 mm), on which a first phase change recording layer was not formed. Thereafter, a stamper (thickness: 0.3 mm) made of nickel was put thereon, thereafter the substrate was rotated so as to remove the excess photo (ultraviolet light)-curing resin.

Thereafter, ultraviolet light was irradiated onto the polycarbonate substrate-side so as to cure the photo-curing resin, thereby forming an optically permeable intermediate layer. Thereafter, the stamper was separated therefrom, thereby obtaining a disk-shaped test sample. The thickness of the optically permeable intermediate layer was measured for the radial direction of the intermediate layer.

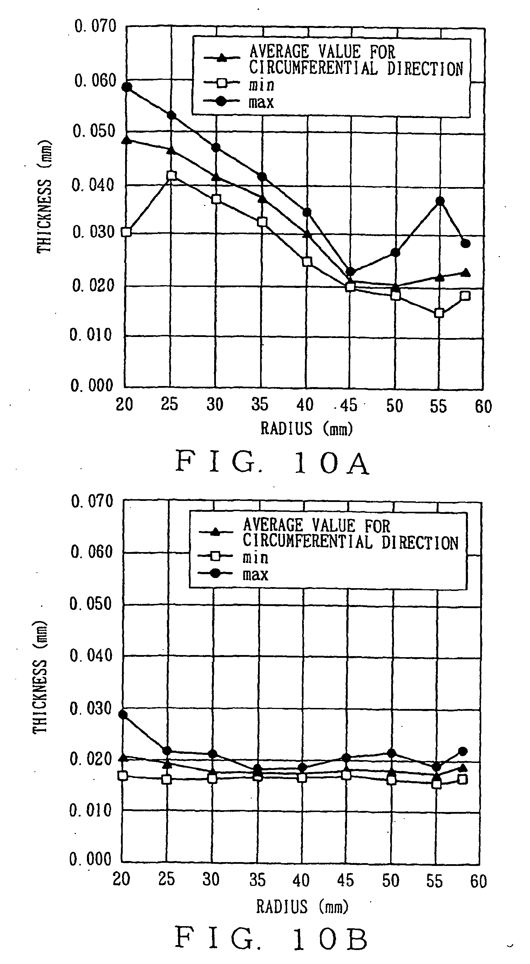

Figure 10A shows a change in the thickness of the optically permeable intermediate layer for the radial direction of the intermediate layer, which was measured from the center of the test sample obtained by using the stamper made of nickel, while Figure 10B shows a change in the thickness of the optically permeable intermediate layer for the radial direction of the intermediate layer, which was measured from the center of the test sample obtained by using the stamper made of amorphous polyolefin resin according to the present invention.

The measurements described above were carried out plural times with changing the measurement points for the circumferential direction of the intermediate layer. In Figs. 10A and 10B, "average value for circumferential direction" denotes an average of the measured values of the thickness, "min" denotes the minimum value, and "max" denotes the maximum value.

The results shown in Figs. 10A and 10B reveal that when the stamper according to the present invention was used, the variation in the thickness of the optically permeable intermediate layer for its radial direction could significantly be reduced and also the variation in the thickness (that is, a difference between the maximum thickness and the minimum thickness for each value of the radius that is a distance from the rotation center) of the optically permeable intermediate layer for its circumferential direction, which causes an error in recording and reading in an optical recording medium, could be reduced in comparison with the case when the stamper made of nickel was used.

The effects of the present invention as described above can be considered as follows.

The stamper according to the present invention is rotated when it is put on the non-cured photo-curing resin layer. At this time, the substrate is slightly deformed due to the rotation. When the stamper according to the present invention is used, the stamper is considered to be deformed as the substrate is deformed because the stamper is made of amorphous polyolefin resin, which is comparatively soft material. As a result, the optically permeable intermediate layer having small variation in the thickness for its radial and circumferential directions is considered to be formed. On the contrary, when a stamper made of a material having high stiffness such as nickel is used, the optically permeable intermediate layer having large variation in its thickness seems to be formed since the deformation as described above does not take place.

## Claims

1. A transparent stamper (6) for molding an optical multi-layer recording medium,
**characterized in that**
the transparent stamper (6) is made of amorphous polyolefin resin.

2. The transparent stamper according to claim 1, wherein the thickness of the stamper (6) is from 0.6 mm to 1.5 mm.

3. A process for producing an optical multi-layer recording medium comprising the steps of:
laminating a layer of non-cured photo-curing resin (3a) and a transparent stamper (6) made of polyolefin resin in this sequence on a substrate (1);
curing the non-cured photo-curing resin (3a) with light permeated through the transparent stamper (6); and
removing the transparent stamper (6)
**characterized in that**
the polyolefin resin is amorphous.

4. The process according to claim 3, wherein the thickness of the stamper (6) is from 0.6 mm to 1.5 mm.

5. The process according to claim 3, or 4, wherein the photo-curing resin cured by a light permeated through the transparent stamper is one of an optically permeable intermediate layer (3) or an optically permeable outermost layer (5), wherein the optically permeable intermediate layer (3) is a layer existing between recording layers (2c, 4b) in a multi-layer disc and the optically permeable outermost layer (5) is an outermost layer (5) in the multi-layer disc.

6. The process according to any of claims 3 to 5, wherein the laminating step further includes a step of rotating the substrate (1) on which the layer of photo-curing resin and the amorphous polyolefin resin are laminated, wherein the photo-curing resin is spread over the whole of the substrate (1) by rotating the substrate.

7. A process for molding a transparent stamper (6) for molding an optical multi-layer recording medium, **characterized in that** the transparent stamper (6) made of amorphous polyolefin resin is molded by using a mold, wherein the mold supports the transparent stamper and a master stamper for molding the transparent stamper.

8. The process according to claim 7, wherein the thickness of the stamper (6) is from 0.6 mm to 1.5 mm.

## Patentansprüche

1. Transparente Matrize (6) zum Formen eines mehrschichtigen optischen Aufzeichnungsmediums,
**dadurch gekennzeichnet, dass**
die transparente Matrize (6) aus amorphem Polyolefinharz besteht.

2. Transparente Matrize nach Anspruch 1, wobei die Dicke der Matrize (6) zwischen 0,6 mm und 1,5 mm beträgt.

3. Verfahren zum Herstellen eines mehrschichtigen optischen Aufzeichnungsmediums, das die folgenden Schritte umfasst:
Laminieren einer Schicht aus nicht ausgehärtetem lichthärtendern Harz (3) und einer transparenten Matrize (6), die aus Polyolefinharz besteht, in dieser Reihenfolge auf einem Substrat (1);
Aushärten des nicht ausgehärteten lichthärtenden Harzes (3a) mit Licht, das durch die transparente Matrize (6) dringt; und
Entfernen der transparenten Matrize (6),
**dadurch gekennzeichnet, dass**
das Polyolefinharz amorph ist.

4. Verfahren nach Anspruch 3, wobei die Dicke der Matrize (6) zwischen 0,6 mm und 1,5 mm beträgt.

5. Verfahren nach Anspruch 3 oder 4, wobei das lichthärtende Harz, das durch ein Licht gehärtet wird, das durch die transparente Matrize dringt, eine lichtdurchlässige Zwischenschicht (3) oder eine lichtdurchlässige äußerste Schicht (5) ist, und die lichtdurchlässige Zwischenschicht (3) eine Schicht ist, die zwischen Aufzeichnungsschichten (2c, 4b) in einer mehrschichtigen Platte vorhanden ist, und die lichtdurchlässige äußerste Schicht (5) eine äußerste Schicht (5) in der mehrschichtigen Platte ist.

6. Verfahren nach einem der Ansprüche 3 bis 5, wobei der Schritt des Laminierens des Weiteren einen Schritt des Drehens des Substrats (1) einschließt, auf das die Schicht aus lichthärtendern Harz und das amorphe Polyolefinharz laminiert sind, und das lichthärtende Harz durch Drehen des Substrats über das gesamte Substrat (1) verteilt wird.

7. Verfahren zum Formen einer transparenten Matrize (6) zum Formen eines mehrschichtigen optischen Aufzeichnungsmediums, **dadurch gekennzeichnet, dass** die transparente Matrize (6), die aus amorphem Polyolefinharz besteht, unter Verwendung einer Form geformt wird, wobei die Form die transparente Matrize und eine Urmatrize zum Formen der transparenten Matrize trägt.

8. Verfahren nach Anspruch 7, wobei die Dicke der Matrize (6) zwischen 0,6 mm und 1,5 mm beträgt.

## Revendications

1. Matrice transparente (6) pour mouler un support d'enregistrement optique multicouche, **caractérisée en ce que** la matrice transparente (6) est en résine de polyoléfine amorphe.

2. Matrice transparente selon la revendication 1, dans laquelle l'épaisseur de la matrice (6) se situe dans la plage de 0,6 mm à 1,5 mm.

3. Procédé de production d'un support d'enregistrement optique multicouche, comprenant les étapes consistant à :
stratifier une couche de résine photopolymérisable non polymérisée (3a) et une matrice transparente (6) en résine de polyoléfine, dans cet ordre, sur un substrat (1) ; polymériser la résine photopolymérisable non polymérisée (3a) avec de la lumière diffusant à travers la matrice transparente (6) ; et
enlever la matrice transparente (6),
**caractérisé en ce que** la résine de polyoléfine est amorphe.

4. Procédé selon la revendication 3, dans lequel l'épaisseur de la matrice (6) se situe dans la plage de 0,6 mm à 1,5 mm.

5. Procédé selon la revendication 3 ou la revendication 4, dans lequel la résine photopolymérisable polymérisée par de la lumière diffusant à travers la matrice transparente est l'une parmi une couche intermédiaire optiquement perméable (3) ou une couche la plus externe optiquement perméable (5), la couche intermédiaire optiquement perméable (3) étant une couche présente entre des couches d'enregistrement (2c, 4b) d'un disque multicouche et la couche la plus externe optiquement perméable (5) est une couche la plus externe (5) du disque multicouche.

6. Procédé selon l'une quelconque des revendications 3 à 5, dans lequel l'étape de stratification comprend en outre une étape de rotation du substrat (1) sur lequel la couche de résine photopolymérisable et la résine de polyoléfine amorphe sont stratifiées, la résine photopolymérisable étant étalée sur toute la surface du substrat (1) en faisant tourner le substrat.

7. Procédé de moulage d'une matrice transparente (6) pour mouler un support d'enregistrement optique multicouche, **caractérisé en ce que** la matrice transparente (6) en résine de polyoléfine amorphe est moulée en utilisant un moule, ledit moule supportant la matrice transparente et une matrice maître pour mouler la matrice transparente.

8. Procédé selon la revendication 7, dans lequel l'épaisseur de la matrice (6) se situe dans la plage de 0,6 mm à 1,5 mm.
